# EUROPÄISCHE PATENTSCHRIFT

(11) **EP 2 757 079 B1**
(45) Veröffentlichungstag und Bekanntmachung des Hinweises auf die Patenterteilung: **22.04.2020**
(21) Anmeldenummer: 13382020.9
(22) Anmeldetag: 21.01.2013
(51) Int. Cl.: F24C 15/10, C03C 23/00

(54) **Kochfeldvorrichtung**
Cooking hob
Plaque de cuisson

(43) Veröffentlichungstag der Anmeldung: 23.07.2014
(73) Patentinhaber: BSH Hausgeräte GmbH, 81739 München (DE)
(72) Erfinder: Alaman Aguilar, Jorge, Zaragoza (ES); Escartín Barduzal, Andrés, Zaragoza (ES); Martín Gómez, Dámaso, Zaragoza (ES); Martínez Solanas, Elena, Zaragoza (ES); Pérez Cabeza, Pilar, Zaragoza (ES); Planas Layunta, Fernando, Zaragoza (ES); Puig Valls, Oriol, Tarrega (Lerida) (ES); Urrutia Angos, David, Zaragoza (ES)

(56) Entgegenhaltungen:
- EP-A1- 1 867 613
- EP-A2- 2 236 312
- WO-A1-2011/020718
- WO-A1-2012/131511
- DE-A1-102010 045 149
- DE-A1-102012 206 930
- DE-U1-202006 004 064

## Beschreibung

Die Erfindung geht aus von einer Kochfeldvorrichtung nach dem Oberbegriff des Anspruchs 1.

Es ist bekannt, Kochplatten mit Beschichtungen zu versehen, wobei Bereiche der Kochfeldplatte, unter denen ein Display angeordnet ist, freigelassen werden.

Aus EP 2 236 312 A2 ist ein Kochfeld mit einer transparenten Platteneinheit bekannt, die auf einer Rückseite mit einer Beschichtung versehen ist.

Aus EP 1 867 613 A1 ist ein Kochfeld mit einer Glaskeramikplatte offenbart, die ein Sichtfenster und eine blickdichte unterseitige Beschichtung aufweist, die im Bereich des Sichtfensters, das mit einer gesonderten Beschichtung versehen ist, ausgespart ist.

Aus der DE 10 2010 045 149 A1 ist ein Kochfeld mit einer transparenten Platte offenbart, die ein Sichtfenster und eine Beschichtung auf der Oberseite der Platte aufweist.

Die Aufgabe der Erfindung besteht insbesondere darin, eine gattungsgemäße Vorrichtung mit verbesserten Eigenschaften hinsichtlich eines verbesserten Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung mit einer Beschichtung und mit zumindest einer zumindest teilweise transparenten Platteneinheit, die zumindest einen Teilbereich aufweist, der für eine Beschichtung vorgesehen ist, wobei die Beschichtung auf einer Sichtseite der Platteneinheit angeordnet ist und eine Außenfläche ausbildet, wobei der Teilbereich einen Sichtbereich zumindest im Wesentlichen umrahmt, wobei der Sichtbereich dazu vorgesehen ist, einem Bediener von außen Einblick in einen Bereich hinter der Platteneinheit, insbesondere auf eine Bedienerschnittstelle, zu gewähren.

Hierbei weist die Platteneinheit zumindest eine Strukturierung auf, die in einem Inneren der Platteneinheit entlang zumindest eines Teils zumindest eines Randes des Teilbereichs angeordnet ist. Insbesondere ist in dem zumindest einen Teilbereich eine Beschichtung angeordnet. Vorzugsweise bildet der Rand des Teilbereichs einen Rand der Beschichtung. Unter einer "Platteneinheit" soll insbesondere eine Einheit verstanden werden, die eine Dicke aufweist, die maximal 20 %, insbesondere maximal 10 %, vorteilhaft maximal 3 %, vorzugsweise maximal 1 %, einer Länge und einer Breite der Einheit entspricht. Unter einer "Dicke" der Platteneinheit soll insbesondere eine kürzeste Seitenkante eines kleinsten gedachten Quaders, der die Platteneinheit komplett umfasst, verstanden werden. Unter der "Länge" bzw. der "Breite" der Platteneinheit sollen insbesondere die Längen der weiteren Seitenkanten des kleinsten gedachten Quaders verstanden werden. Insbesondere weist die Platteneinheit eine Dicke auf, die kleiner ist als 2 cm, insbesondere kleiner ist als 1 cm, vorteilhaft kleiner ist als 0,5 cm. Darunter, dass die Platteneinheit zumindest teilweise "transparent" ist, soll insbesondere verstanden werden, dass die Platteneinheit in zumindest einer Richtung, insbesondere zumindest im Wesentlichen parallel zur Dicke, und in zumindest einem räumlichen Bereich, insbesondere in jedem räumlichen Bereich, in zumindest einem Wellenlängenbereich, insbesondere für zumindest 10 %, vorteilhaft für zumindest 30 %, besonders vorteilhaft für zumindest 60 %, vorzugsweise für zumindest 95 %, des sichtbaren Lichts zwischen 380 nm und 780 nm eine Transparenz von zumindest 10 %, insbesondere zumindest 30 %, vorteilhaft zumindest 50 %, vorzugsweise zumindest 70 % aufweist, wobei "Transparenz" insbesondere den Anteil des Lichts bezeichnet, der gestreut und/oder auf direktem Weg durch die Platteneinheit dringt. Insbesondere ist die Platteneinheit zumindest teilweise transluzent ausgebildet. Insbesondere ist die Platteneinheit aus einem zumindest glasartigen Material, insbesondere aus Glaskeramik und/oder Borosilikatglas, alternativ aus Fensterglas, Sicherheitsglas, Plexiglas und/oder anderem, einem Fachmann als geeignet erscheinenden Material, gebildet. Insbesondere ist die Platteneinheit zumindest im Wesentlichen von einem klaren Material gebildet. Insbesondere ist der Teilbereich von einem Teil einer Oberfläche der Platteneinheit gebildet. Unter einer "Beschichtung" soll insbesondere eine aus einer einzelnen Schicht oder aus mehreren Schichten gebildete Struktur verstanden werden, die auf die Platteneinheit, insbesondere mittels eines Druckverfahrens, eines Sprühverfahrens und/oder mittels eines physikalischen und/oder chemischen Abscheideverfahrens, aufgebracht ist. Insbesondere weist die Beschichtung eine Dicke auf, die maximal 30 %, insbesondere maximal 10 %, vorteilhaft maximal 3 %, vorzugsweise maximal 1 %, einer Dicke der Platteneinheit entspricht. Vorzugsweise weist die Beschichtung zumindest im Bereich des sichtbaren Lichts eine Transparenz von maximal 30 %, insbesondere maximal 10 %, vorteilhaft maximal 3 %, auf. Unter einer "Strukturierung" soll insbesondere ein mit bloßem Auge wahrnehmbares Objekt verstanden werden. Insbesondere ist die Strukturierung als ein-, zwei- und/oder dreidimensionales, insbesondere linienartiges und/oder flächiges, Objekt, das insbesondere zumindest im Wesentlichen parallel zu der Beschichtung angeordnet ist, ausgebildet. Erfindungsgemäß ist die Strukturierung dazu vorgesehen, eine Transparenz der Platteneinheit quer zur Strukturierung zu verringern. Insbesondere ist die Strukturierung dazu vorgesehen, eine Lichtstreuung zu vergrößern. Darunter, dass die Strukturierung in einem "Inneren" der Platteneinheit angeordnet ist, soll insbesondere verstanden werden, dass die Strukturierung zumindest im Wesentlichen ringsum von Material der Platteneinheit umgeben, insbesondere umschlossen, ist. Unter einem "Rand" des Teilbereichs soll insbesondere eine Gruppe von zumindest einer Fläche verstanden werden, die in einer, vorzugsweise orthogonalen, Projektion auf eine Oberfläche von der der Teilbereich gebildet, zumindest eine Begrenzungslinie des Teilbereichs bildet. Darunter, dass die Struktur "entlang" eines Teilstücks des Rands angeordnet ist, soll insbesondere verstanden werden, dass die Struktur den Rand innerhalb des Teilstücks mit Abständen von maximal 5 mm, insbesondere maximal 1 mm, vorteilhaft maximal 0,3 mm, vorzugsweise maximal 0,1 mm, zumindest punktuell schneidet. Vorzugsweise folgt die Struktur dem Rand des Teilbereichs. Insbesondere ist die Struktur maximal 10 cm, insbesondere maximal 5 cm, vorteilhaft maximal 2 cm, besonders vorteilhaft maximal 1 cm, von dem Rand entfernt. Insbesondere erstreckt sich die Struktur, insbesondere kontinuierlich, entlang zumindest 3 cm, insbesondere zumindest 10 cm, vorteilhaft zumindest 20 cm, des Rands. Insbesondere weist die Platteneinheit zumindest zwei, insbesondere zumindest drei, vorteilhaft zumindest vier, Strukturen auf, die in einem Inneren der Platteneinheit angeordnet sind, wobei zumindest zwei der Strukturen in unterschiedlichen Abständen zu einer Oberfläche der Platteneinheit angeordnet sind. Unter "vorgesehen" soll insbesondere speziell ausgeformt, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort erreicht werden. Insbesondere kann eine verbesserte gestalterische Freiheit erreicht werden. Insbesondere kann ein schräger Einblick in einen Bereich, der hinter dem mit der Beschichtung versehenen Teilbereich liegt, vermieden werden. Es kann insbesondere eine Hervorhebung eines Funktionsbereichs, insbesondere eines Eingabe- und/oder Anzeigebereichs verbessert werden.

Unter einer "Außenfläche" soll insbesondere eine Fläche der Kochfeldvorrichtung verstanden werden, die in dem ein die Kochfeldvorrichtung aufweisendes Kochfeld in einer Einbaunische untergebracht ist, in einem Sichtfeld eines Bedieners liegt und/oder die unmittelbar berührt werden kann. Es kann insbesondere eine optisch ansprechende Ausgestaltung erreicht werden. Insbesondere findet die erfindungsgemäße Ausgestaltung besonders vorteilhaften Einsatz.

Unter einem "Sichtbereich" soll erfindungsgemäß ein Bereich verstanden werden, der dazu vorgesehen ist, einem Bediener von außen Einblick in einen Bereich hinter der Platteneinheit, insbesondere auf eine Bedienerschnittstelle, zu gewähren. In nicht durch die Erfindung gestützten Alternativen wäre auch ein Einblick in einen Funktionsraum, insbesondere einem Garraum, Waschraum, Lagerraum oder Ähnliches möglich. Insbesondere ist die Strukturierung dazu vorgesehen, den Sichtbereich zumindest im Wesentlichen einzurahmen. Es kann insbesondere eine vorteilhafte Anwendung der Erfindung erreicht werden. Es kann insbesondere ein hoher Komfort erreicht werden.

Weiterhin wird vorgeschlagen, dass die Strukturierung mittels eines Laserstrahls gebildet ist. Insbesondere ist die Strukturierung als Laserinnengravur ausgebildet. Insbesondere ist die Strukturierung von durch zumindest einen Laserstrahl manipuliertem Material der Platteneinheit gebildet. Insbesondere ist die Strukturierung von Gasbläschen gebildet, die durch Laserbeschuss in dem Material der Platteneinheit erzeugt wurden. Es kann insbesondere eine flexible, einfache, effiziente und/oder kostengünstige Ausgestaltung erreicht werden. Alternativ ist es denkbar, dass die Strukturierung bei einer Erzeugung der Platteneinheit, beispielsweise durch Einbringung von Fremdmaterial in diese, erzeugt wird. Weiterhin ist es denkbar, dass die Strukturierung durch lonenstrahlen, insbesondere Ionenstrahlimplantation, bei der insbesondere neben Fremdmaterial Energie eingebracht wird, erzeugt ist.

Ferner wird vorgeschlagen, dass die Strukturierung zumindest teilweise, insbesondere zu mindestens 30 %, vorteilhaft zu mindestens 50 %, besonders vorteilhaft zu mindestens 70 %, vorzugsweise zu mindestens 90 %, in dem Teilbereich angeordnet ist. Darunter, dass ein Teil der Strukturierung "in" dem Teilbereich angeordnet ist, soll insbesondere verstanden werden, dass dieser Teil in einer, vorzugsweise orthogonalen, Projektion auf eine den Teilbereich aufweisenden Oberfläche, in dem Teilbereich liegt. Es kann insbesondere eine gute Sichtversperrung, insbesondere bei schrägem Einblick, erreicht werden.

Weiterhin wird vorgeschlagen, dass die Strukturierung zumindest teilweise, insbesondere zu mindestens 10 %, vorteilhaft zu mindestens 20 %, vorteilhaft zu mindestens 30 %, und/oder zu maximal 50 %, insbesondere zu maximal 30 %, außerhalb des Teilbereichs, insbesondere im Sichtbereich, angeordnet ist. Darunter, dass ein Teil der Strukturierung "außerhalb" des Teilbereichs angeordnet ist, soll insbesondere verstanden werden, dass dieser Teil in einer, vorzugsweise orthogonalen, Projektion auf eine den Teilbereich aufweisende Oberfläche, außerhalb des Teilbereichs liegt. Insbesondere ist es denkbar, dass eine erste Strukturierung, die von der Oberfläche mit dem Teilbereich weiter entfernt ist, als eine zweite Strukturierung einen größeren Anteil aufweist, der in dem Teilbereich liegt, als die zweite Strukturierung. Es kann insbesondere ein optisch angenehmer Übergang zwischen dem Teilbereich und dem Sichtbereich erreicht werden.

Ferner wird vorgeschlagen, dass die Beschichtung zumindest im Wesentlichen von einem zumindest emailartigen Material gebildet ist. Unter einem "emailartigen" Material soll insbesondere ein Material verstanden werden, dass zumindest in einem ausgehärteten Zustand ein glasartiges und/oder emailnes Erscheinungsbild aufweist. Insbesondere ist die Beschichtung aus geschmolzenen Glas- und/oder Keramikfritten gebildet, die auf den Teilbereich aufgebracht und zu einer einheitlichen Schicht verschmolzen wurden. Es kann insbesondere eine homogene und/oder harte Oberfläche erreicht werden. Insbesondere kann eine hohe Farbenvielfalt der Oberfläche erreicht werden. Insbesondere kann ein keramischer Anschein der Platteneinheit erzeugt werden. Insbesondere kann eine hohe Gesamtsteifigkeit und/oder -flexibilität der Platteneinheit erreicht werden. Alternativ sind Ausgestaltungen denkbar, wobei die Beschichtung aus einem, vorzugsweise thermisch, insbesondere bis zu Temperaturen von 300 °C, stabilen, Polymer, insbesondere einem Harz, gebildet. Vorzugsweise weist die Beschichtung einen Härtegrad nach Mohs von zumindest 5, vorteilhaft zumindest 6, vorzugsweise zumindest 7 , auf. Erfindungsgemäß ist die Platteneinheit als Kochfeldplatte ausgebildet.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen in schematischer Ansicht:
- Fig. 1: ein erfindungsgemäßes Induktionskochfeld mit einer erfindungsgemäßen Kochfeldvorrichtung in einer Ansicht von oben,
- Fig. 2: eine Darstellung eines Schnitts durch die Kochfeldvorrichtung entlang der Linie II-II in Figur 1 und
- Fig. 3: einen Herstellungsschritt einer erfindungsgemäßen Kochfeldvorrichtung.

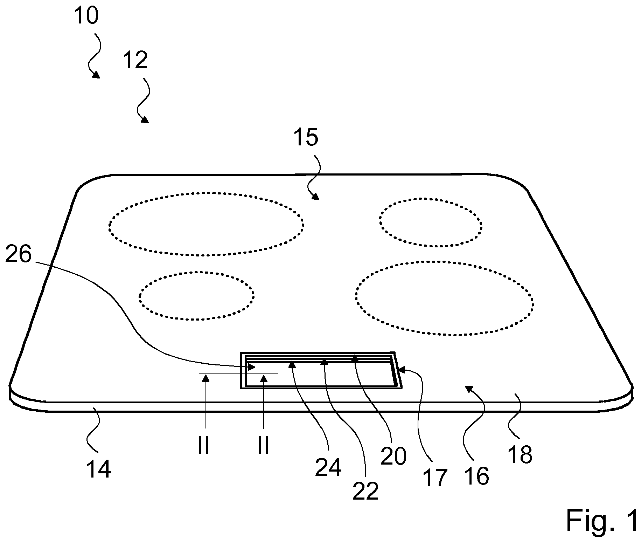

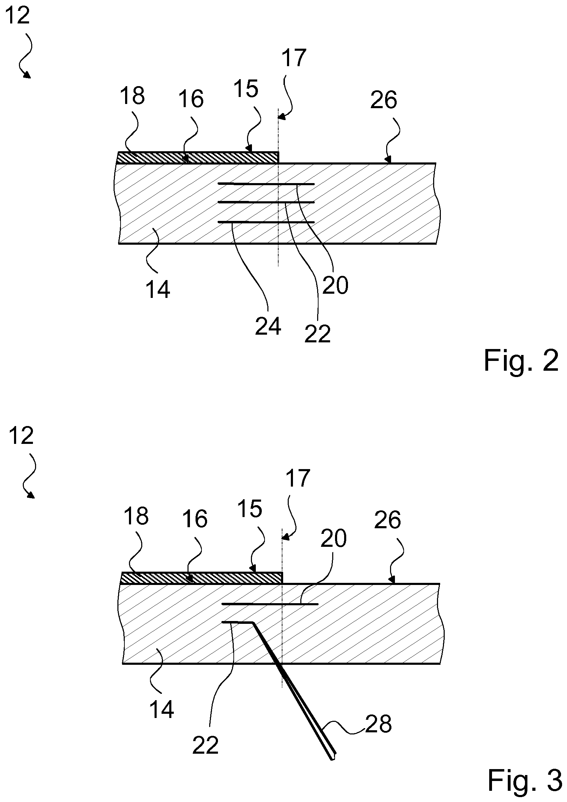

Figur 1 zeigt ein als Induktionskochfeld ausgebildetes Kochfeld 10 mit einer als Induktionskochfeldvorrichtung ausgebildeten Kochfeldvorrichtung 12. Die Kochfeldvorrichtung 12 weist eine transparente Platteneinheit 14 auf. Die Platteneinheit 14 weist einen Teilbereich 16 auf, auf dem eine Beschichtung 18 angeordnet ist. Die Platteneinheit 14 weist drei Strukturierungen 20, 22, 24 auf, die in einem Inneren der Platteneinheit 14 entlang eines Randes 17 des Teilbereichs 16 angeordnet ist (Figur 2). Die Beschichtung 18 bildet eine Außenfläche 15 aus. Die Beschichtung 18 ist auf einer Oberseite der Platteneinheit 14 angeordnet. Die Beschichtung 18 ist von Email gebildet. Der Teilbereich 16 umrahmt einen Sichtbereich 26. Der Rand 17 bildet eine Umrandung des Sichtbereichs 26. Unter der Platteneinheit 14 ist in dem Sichtbereich 26 ein Touch-Display angeordnet (nicht dargestellt), das zu einer Bedienung des Kochfelds 10 bzw. einer Einstellung von Heizleistungen von Kochzonen vorgesehen ist. Der Teilbereich 16 ist bis auf den Sichtbereich 26 von der Oberseite der Platteneinheit 14 gebildet.

Die Strukturierungen 20, 22, 24 sind jeweils zu 60 % in dem Teilbereich 16 angeordnet. Die Strukturierungen 20, 22, 24 sind jeweils zu 40 % außerhalb des Teilbereichs 16 angeordnet. Die Strukturierungen 20, 22, 24 weisen quer zum Rand 17 jeweils eine Erstreckung auf, die größer ist als eine Dicke der Platteneinheit 14. Die Strukturierungen 20, 22, 24 weisen quer zum Rand 17 jeweils eine Erstreckung auf, die kleiner ist als ein doppeltes einer Dicke der Platteneinheit 14. Die Platteneinheit 14 weist eine Dicke von 4 mm auf. Die Strukturierungen 20, 22, 24 sind jeweils bandartig ausgebildet. Die Strukturierungen 20, 22, 24 bilden jeweils eine zumindest geschlossen erscheinende Fläche.

Bei einer Herstellung wird zuerst die Grundform der Platteneinheit 14 hergestellt und der Teilbereich 16 der Platteneinheit 14 mit der Beschichtung 18 versehen. Die Beschichtung 18 wird hergestellt durch Aufbringen einer dünnen Schicht Fritten in den Teilbereich 16, wobei die Fritten vorteilhaft in einer Trägermasse, insbesondere einer Lösung, eingebettet sind. Durch Erhitzen wird die Trägermasse verdampft und die Fritten miteinander verschmolzen. Anschließend, also nach der Beschichtung 18, werden die Strukturierungen 20, 22, 24 mittels eines Laserstrahls 28 in die Platteneinheit 14 eingebracht. Der Laserstrahl 28 dringt dabei von einer von der Beschichtung 18 abgewandten Seite der Platteneinheit 14 ein. Die Strukturierungen 20, 22, 24 werden der Reihe nach erzeugt, wobei die Strukturierungen 20, 22, die näher an der Beschichtung 18 liegen, vor den Strukturierungen 22, 24, die weiter von der Beschichtung 18 entfernt sind, eingebracht werden. Dabei werden laterale Positionen der Strukturierungen 20, 22, 24 an eine Position der Beschichtung 18 angepasst, so dass Positionsabweichungen der Beschichtung 18 ausgeglichen werden. Die Strukturierungen 20, 22, 24 sind in ihrer Form und ihrer Position deckungsgleich zueinander ausgebildet.

Weiterhin kann durch die Strukturierungen 20, 22, 24 ein klar abgegrenztes Fenster geschaffen werden, wodurch eventuell vorhandene leichte Unregelmäßigkeiten an einer Berandung der Beschichtung 18 verdeckt werden können.

In weiteren Ausgestaltungen ist es denkbar, dass die Strukturierungen, die näher an der Beschichtung liegen, eine geringere Flächenkontinuität und somit eine höhere direkte Transparenz aufweisen als Strukturierungen, die weiter von der Beschichtung entfernt sind.

Ferner ist es denkbar, dass die Strukturierung durch Laser oder ein anderes Verfahren vor einem Aufbringen der Beschichtung eingebracht werden.

Weiterhin ist es denkbar, dass die Strukturierungen, eine gleiche Breite aufweisen, wobei Strukturierungen, die weiter von der Beschichtung entfernt sind, mit einem größeren Anteil in dem Teilbereich liegen und/oder dass die Strukturierungen unterschiedliche Breiten aufweisen, wobei ein jeweils gleich breiter Bereich der Strukturierungen außerhalb des Teilbereichs liegt und wobei Strukturierungen, die weiter von der Beschichtung entfernt sind als andere der Strukturierungen, einen breiteren Bereich aufweisen, der in dem Teilbereich liegt.

### Bezugszeichen

- 10: Kochfeld
- 12: Kochfeldvorrichtung
- 14: Platteneinheit
- 15: Außenfläche
- 16: Teilbereich
- 17: Rand
- 18: Beschichtung
- 20: Strukturierung
- 22: Strukturierung
- 24: Strukturierung
- 26: Sichtbereich
- 28: Laserstrahl

## Patentansprüche

1. Kochfeldvorrichtung mit einer Beschichtung (18) und mit zumindest einer zumindest teilweise transparenten Platteneinheit (14), die zumindest einen Teilbereich (16) aufweist, der für die Beschichtung (18) vorgesehen ist, wobei die Beschichtung (18) auf einer Sichtseite der Platteneinheit (14) angeordnet ist und eine Außenfläche (15) ausbildet, wobei der Teilbereich (16) einen Sichtbereich (26) zumindest im Wesentlichen umrahmt, wobei der Sichtbereich (26) dazu vorgesehen ist, einem Bediener von außen Einblick in einen Bereich hinter der Platteneinheit (14), insbesondere auf eine Bedienerschnittstelle, zu gewähren, **dadurch gekennzeichnet, dass** die Platteneinheit (14) zumindest eine Strukturierung (20, 22, 24) aufweist, die in einem Inneren der Platteneinheit (14) entlang zumindest eines Teils zumindest eines Randes (17) des Teilbereichs (16) angeordnet ist, und dass die Strukturierung (20, 22, 24) dazu vorgesehen ist, eine Transparenz der Platteneinheit (14) quer zur Strukturierung (20, 22, 24) zu verringern.

2. Kochfeldvorrichtung nach Anspruch 1, **dadurch gekennzeichnet, dass** die Strukturierung (20, 22, 24) mittels eines Laserstrahls (28) gebildet ist.

3. Kochfeldvorrichtung nach einem der vorhergehenden Ansprüche, **dadurch gekennzeichnet, dass** die Strukturierung (20, 22, 24) zumindest teilweise in dem Teilbereich (16) angeordnet ist.

4. Kochfeldvorrichtung nach einem der vorhergehenden Ansprüche, **dadurch gekennzeichnet, dass** die Strukturierung (20, 22, 24) zumindest teilweise außerhalb des Teilbereichs (16) angeordnet ist.

5. Kochfeldvorrichtung nach einem der vorhergehenden Ansprüche, **dadurch gekennzeichnet, dass** die Beschichtung (18) zumindest im Wesentlichen von einem zumindest emailartigen Material gebildet ist.

6. Kochfeld mit einer Kochfeldvorrichtung nach einem der vorhergehenden Ansprüche.

7. Verfahren zur Herstellung einer Kochfeldvorrichtung nach einem der Ansprüche 1 bis 5.

8. Verfahren nach Anspruch 7, **dadurch gekennzeichnet, dass** die Strukturierung (20, 22, 24) nach Aufbringung der Beschichtung (18) erzeugt wird.

## Claims

1. Cooking hob device with a coating (18) and with at least one plate unit (14) which is at least partially transparent and which has at least one subarea (16) which is provided for the coating (18), wherein the coating (18) is arranged on a visible face of the plate unit (14) and embodies an outer surface (15), wherein the subarea (16) encloses a field of vision (26) at least substantially, wherein the field of vision (26) is provided to give a user a glimpse from the outside into an area to the rear of the plate unit (14), in particular on an operator interface, **characterised in that** the plate unit (14) has at least one structuring (20, 22, 24) which is arranged in an interior of the plate unit (14) along at least one part of at least one edge (17) of the subarea (16), and that the structuring (20, 22, 24) is provided to reduce a transparency of the plate unit (14) at right angles to the structuring (20, 22, 24).

2. Cooking hob device according to claim 1, **characterised in that** the structuring (20, 22, 24) is formed by means of a laser beam (28).

3. Cooking hob device according to one of the preceding claims, **characterised in that** the structuring (20, 22, 24) is arranged at least partially in the subarea (16).

4. Cooking hob device according to one of the preceding claims, **characterised in that** the structuring (20, 22, 24) is arranged at least partially outside of the subarea (16).

5. Cooking hob device according to one of the preceding claims, **characterised in that** the coating (18) is formed at least substantially from an at least enamel-type material.

6. Cooking hob with a cooking hob device according to one of the preceding claims.

7. Method for producing a cooking hob device according to one of claims 1 to 5.

8. Method according to claim 7, **characterised in that** the structuring (20, 22, 24) is produced after applying the coating (18).

## Revendications

1. Dispositif de champ de cuisson avec un revêtement (18) et avec au moins une unité de plaque (14) au moins partiellement transparente, qui présente au moins une zone partielle (16) prévue pour le revêtement (18), dans lequel le revêtement (18) est disposé sur un côté visible de l'unité de plaque (14) et constitue une surface extérieure (15), dans lequel la zone partielle (16) encadre au moins essentiellement une zone de vision (26), dans lequel la zone de vision (26) est prévue afin de permettre à un utilisateur de voir de l'extérieur une zone derrière l'unité de plaque (14), en particulier une interface utilisateur, **caractérisé en ce que** l'unité de plaque (14) présente au moins une texture (20, 22, 24) disposée à l'intérieur de l'unité de plaque (14) le long d'au moins une partie d'au moins un bord (17) de la zone partielle (16) et **en ce que** la texture (20, 22, 24) est prévue afin de réduire une transparence de l'unité de plaque (14) transversalement à la texture (20, 22, 24).

2. Dispositif de champ de cuisson selon la revendication 1, **caractérisé en ce que** la texture (20, 22, 24) est constituée au moyen d'un faisceau laser (28).

3. Dispositif de champ de cuisson selon l'une des revendications précédentes, **caractérisé en ce que** la texture (20, 22, 24) est disposée au moins partiellement dans la zone partielle (16).

4. Dispositif de champ de cuisson selon l'une des revendications précédentes, **caractérisé en ce que** la texture (20, 22, 24) est disposée au moins partiellement en dehors la zone partielle (16).

5. Dispositif de champ de cuisson selon l'une des revendications précédentes, **caractérisé en ce que** le revêtement (18) est au moins essentiellement constitué par un matériau au moins de la nature d'émail.

6. Champ de cuisson avec un dispositif de champ de cuisson selon l'une des revendications précédentes.

7. Procédé de fabrication d'un dispositif de champ de cuisson selon l'une des revendications 1 à 5.

8. Procédé selon la revendication 7, **caractérisé en ce que** la texture (20, 22, 24) est produite après l'application du revêtement (18).
